Europäisches Patentamt

European Patent Office

Office européen des brevets

(19)

(11) **EP 0 602 717 B1**

(12) **FASCICULE DE BREVET EUROPEEN**

(45) Date de publication et mention
de la délivrance du brevet:
**01.10.1997 Bulletin 1997/40**

(51) Int Cl.[6]: **G06F 15/80**, G06K 9/66

(21) Numéro de dépôt: **93203442.4**

(22) Date de dépôt: **09.12.1993**

(54) **Dispositif neuronal et procédé pour le construire**

Neuronalanlage und -Bauverfahren

Neural device and construction method

(84) Etats contractants désignés:
**DE FR GB**

(30) Priorité: **16.12.1992 FR 9215190**

(43) Date de publication de la demande:
**22.06.1994 Bulletin 1994/25**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeurs:
- **Gentric, Philippe, Société Civile S.P.I.D.**
  **F-75008 Paris (FR)**
- **Minot, Joel, Société Civile S.P.I.D.**
  **F-75008 Paris (FR)**

(74) Mandataire: **Caron, Jean et al**
**Société Civile S.P.I.D.**
**156, Boulevard Haussmann**
**75008 Paris (FR)**

(56) Documents cités:
- **IJCNN INTERNATIONAL JOINT CONFERENCE ON NEURAL NETWORKS vol. 3 , 17 Juin 1990 , SAN DIEGO , USA pages 245 - 250 KONG 'The piecewise linear neural network : training and recognition'**
- **1991 IEEE INTERNATIONAL JOINT CONFERENCE ON NEURAL NETWORKS vol. 3 , 18 Novembre 1991 , SINGAPORE pages 2709 - 2715 FANG 'Unsupervised learning for neural trees'**
- **IJCNN INTERNATIONAL JOINT CONFERENCE ON NEURAL NETWORKS vol. 1 , 17 Juin 1990 , SAN DIEGO , USA pages 423 - 428 CASASENT 'Adaptive clustering neural net for piecewise nonlinear discriminant surfaces'**
- **IJCNN INTERNATIONAL JOINT CONFERENCE ON NEURAL NETWORKS vol. 1 , 7 Juin 1992 , BALTIMORE , USA pages 576 - 581 WENG 'Cresceptron : A self-organizing neural network which grows adaptively'**
- **IJCNN INTERNATIONAL JOINT CONFERENCE ON NEURAL NETWORKS vol. 1 , 17 Juin 1990 , SAN DIEGO , USA pages 637 - 642 DEFFUANT 'Neural units recruitment algorithm for generation of decision trees'**

**Description**

La présente invention selon le préambule de la revendication 1 concerne un procédé pour construire un dispositif neuronal destiné au classement d'objets, au moyen d'un ensemble d'échantillons d'apprentissage ou exemples qui sont des objets dont la classe est connue, chaque objet à classer étant défini par un vecteur d'entrée qui peut être représenté par un point dans un hyper-espace, le dispositif comportant :

- une couche de neurones d'entrée correspondant chacun à une des dimensions de l'hyper-espace,
- une couche de neurones cachés dont les entrées sont exclusivement connectées aux neurones d'entrée et dont l'activation est une fonction inverse de la distance, dans l'hyper-espace, entre le point qui représente le vecteur d'entrée et un point de référence qui est associé à ce neurone caché,
- et une couche de neurones de sortie correspondant chacun à une des classes,

procédé consistant à :

- partir d'un dispositif sans neurone caché,
- prélever un échantillon quelconque dans le dit ensemble d'échantillons d'apprentissage,
- placer un premier neurone caché dans le dispositif en définissant le dit point de référence associé à ce neurone comme étant le point qui représente dans l'hyper-espace l'échantillon prélevé et en disposant une connexion de poids positif entre ce neurone caché et le neurone de sortie correspondant à la classe de l'échantillon,
- prélever un nouvel échantillon dans l'ensemble et l'appliquer au dispositif en tant qu'objet à classer et :

  - si le classement fourni en réponse n'est pas correct, introduire dans le dispositif un nouveau neurone caché correspondant au nouvel échantillon en définissant le point de référence associé à ce neurone comme étant le point qui représente dans l'hyper-espace le nouvel échantillon, et en disposant une connexion de poids positif entre le neurone caché et le neurone de sortie correspondant à la classe du nouvel échantillon,
  - alors que si le classement fourni en réponse est correct, aucun neurone caché supplémentaire correspondant au nouvel échantillon n'est ajouté,

- traiter tous les échantillons restants de la même manière jusqu'à ce qu'il n'y ait plus d'échantillon dans l'ensemble.

Elle concerne aussi un dispositif neuronal qui est défini dans le préambule de la revendication 5 et qui est destiné à classer des objets en J classes distinctes, les objets à classer étant définis par des vecteurs d'entrée à K coordonnées qui peuvent être représentés par des points dans un hyper-espace à K dimensions, le dispositif comportant :

- une couche de neurones d'entrée, en nombre K, correspondant chacun à une des dites dimensions,
- une couche de neurones de sortie, en nombre J, correspondant chacun à une des dites classes,
- et une couche de neurones cachés, chacun d'eux étant associé à un point de référence dans l'hyper-espace, et dont l'activation, pour un neurone donné, est une fonction inverse de la distance, dans l'hyper-espace, entre le point de référence qui est associé à ce neurone caché et le point qui représente le vecteur d'entrée.

Un dispositif ainsi construit est utilisé notamment pour le classement d'objets, c'est-à-dire pour la reconnaissance d'objets : il s'agit par exemple de reconnaissance de formes et plus particulièrement de reconnaissance de caractères.

Un tel mode de construction est connu du document "A neural model for categories learning" de Douglas .L. Reilly et autres, dans "Biological Cybernetics" n°45, 35-41 (1982). Le réseau est construit par apprentissage incrémental et la décision pour déterminer la classe est prise sur la base d'une fonction à seuil variable qui définit dans un hyper-espace un volume de domination autour des échantillons.

L'introduction plus ou moins aléatoire des échantillons peut néanmoins avoir pour conséquence que, pour une fiabilité suffisante, le nombre de neurones cachés peut atteindre une valeur supérieure à celle qui serait obtenue pour une définition optimale de ces neurones, avec de ce fait un temps de calcul plus long lors de l'utilisation du réseau. L'invention se propose de fournir un réseau qui, construit par ce procédé, ait une très grande rapidité lors de son utilisation.

A cet effet, selon la partie caractérisante de la revendication 5, l'ensemble des neurones cachés est divisé en groupes avec un neurone représentatif pour chaque groupe, un groupe étant défini comme contenant les neurones pour lesquels les points qui les représentent dans l'hyper-espace sont contenus dans un volume donné autour du point qui représente dans l'hyper-espace le dit neurone représentatif, et la détermination des groupes est faite de la façon suivante :

- le premier neurone introduit est défini comme représentatif d'un premier groupe,
- au fur et à mesure de l'introduction des neurones cachés, on recherche, pour chacun des neurones introduits, s'il fait partie d'un groupe préalablement défini, et :

  - s'il fait partie d'un groupe préalablement défini, il lui est incorporé,
  - s'il ne fait pas partie d'un groupe préalablement défini, un nouveau groupe est formé dont il est le neurone représentatif.

Selon un perfectionnement, les groupes en question étant considérés comme d'un premier niveau, des groupes d'un ou de plusieurs niveaux plus élevés sont définis, pour lesquels le dit volume est plus grand que pour les groupes du premier niveau, et ces groupes de niveau plus élevé sont définis au cours du même processus et de la même façon que les groupes du premier niveau.

Lorsque deux neurones cachés correspondant à deux échantillons d'apprentissage ont des points représentatifs dont les coordonnées sont voisines, mais que ces échantillons ne font néanmoins pas partie de la même classe, une connexion de poids négatif est avantageusement installée entre le neurone caché correspondant à un des échantillons et le neurone de sortie correspondant à la classe de l'autre échantillon.

Ceci améliore la fiabilité des résultats de classement.

Lorsque l'activation des neurones cachés est une fonction prédéterminée, et non pas ajustable, de la distance entre les points de référence, il se peut que la sensibilité du dispositif à des différences entre certains échantillons soit trop faible pour les distinguer correctement l'un de l'autre.

Pour résoudre ce problème, un neurone caché supplémentaire, correspondant à un échantillon d'apprentissage, est avantageusement ajouté avec une liaison vers le neurone de sortie correspondant, si pour cet échantillon, présenté en tant qu'objet à classer, un neurone de sortie est effectivement activé pour la classe voulue, mais que la différence entre l'activité du neurone de sortie le plus activé et celle du neurone de sortie dont l'activation est la plus forte après celle du plus activé, est inférieure à un seuil prédéterminé.

Le choix des valeurs d'activation des neurones cachés et de la règle de sélection déterminant la classe en fonction de l'activation des neurones de sortie a, pour une organisation donnée du réseau, un impact important sur les performances. Dans le document cité plus haut, l'utilisation d'une fonction d'activation des neurones cachés nulle au dessous du seuil ne permet pas d'intégrer de façon progressive l'influence d'échantillons d'apprentissage "lointains", et l'utilisation de neurones "binaires" (en tout ou rien) dans la couche de sortie ne permet pas de prendre des décisions motivées. En outre on ne peut pas gérer une situation dans laquelle deux neurones de sortie sont simultanément actifs.

C'est pourquoi le procédé est plus avantageusement appliqué à un dispositif défini dans la revendication 5 et dans lequel les neurones cachés et leurs points de référence associés ont été déterminés et les neurones cachés ont été répartis en groupes, au moyen du procédé selon l'invention, chaque groupe comprenant un neurone représentatif du groupe, et qui est muni de moyens pour:

- dans un premier temps, lors de la présentation d'un échantillon à classer, faire fonctionner seulement les neurones cachés représentatifs des groupes, et déterminer lequel prend la plus forte activation,
- dans un deuxième temps, faire fonctionner tous les neurones cachés du groupe ou des quelques groupes dont le(s) neurone(s) représentatif(s) a (ont) fourni la plus forte activation dans le premier temps.

Le dispositif est avantageusement muni de moyens pour indiquer comme résultat la classe qui correspond au neurone de sortie le plus activé à condition que la différence entre l'activité de ce dernier et celle du neurone de sortie dont l'activation est la plus forte après celle du plus activé soit supérieure à une certaine valeur, et un neurone de sortie est activé seulement au delà d'un certain seuil d'activation d'un neurone caché.

Cela permet de proposer non seulement un gagnant mais une liste de gagnants dans l'ordre décroissant de vraisemblance, ce qui est un avantage important en reconnaissance de caractères ou l'on peut ensuite utiliser cette liste pour corriger des fautes à partir d'un dictionnaire.

Dans le cas où plusieurs niveaux de groupes ont été définis, le dispositif est avantageusement muni de moyens pour, lors de la présentation d'un échantillon à classer, faire fonctionner dans un premier temps seulement les neurones cachés représentatifs des groupes du niveau le plus élevé, et déterminer lequel prend la plus forte activation, de moyens pour faire fonctionner, dans un temps suivant, seulement les neurones cachés représentatifs des groupes du niveau immédiatement inférieur, contenus dans le groupe du niveau le plus élevé, dont le neurone représentatif a fourni la plus forte activation dans le premier temps, et déterminer lequel prend la plus forte activation, et ainsi de suite jusqu'au premier niveau.

Ce dispositif est en outre remarquable en ce que, pour calculer l'activation de chacun des neurones cachés en fonction inverse de la distance dans l'hyper-espace entre le point de référence associé à ce neurone caché et le point représentant le vecteur d'entrée, il est muni de moyens pour déterminer l'activation d'un neurone caché d'indice "i" par

la formule :

$$\text{Activation} = f\left(\text{ racine } n^{\text{ième}} \left(\sum_{k=0}^{K-1} ((|X_k - W_{ki}|)^n)\right)/\sigma_i\right)$$

dans laquelle les $W_{ki}$ sont les K coordonnées de l'échantillon qui a entraîné la création du neurone "i", $\sigma_i$ est un coefficient ajustable propre au neurone "i", les $X_k$ sont les K coordonnées d'un vecteur d'entrée à classer, n est un nombre entier par exemple égal à deux, et la fonction "f" est une fonction qui grandit lorsque son argument tend vers zéro.

La susdite racine $n^{\text{ième}}$ est avantageusement une racine carrée.

Ces aspects de l'invention ainsi que d'autres aspects plus détaillés apparaîtront plus clairement grâce à la description suivante d'un mode de réalisation non limitatif.

La figure 1 représente schématiquement un réseau de neurones que l'invention permet de construire.

La figure 2 illustre des points représentatifs d'échantillons dans l'hyper-espace, deux dimensions étant représentées parmi les K dimensions.

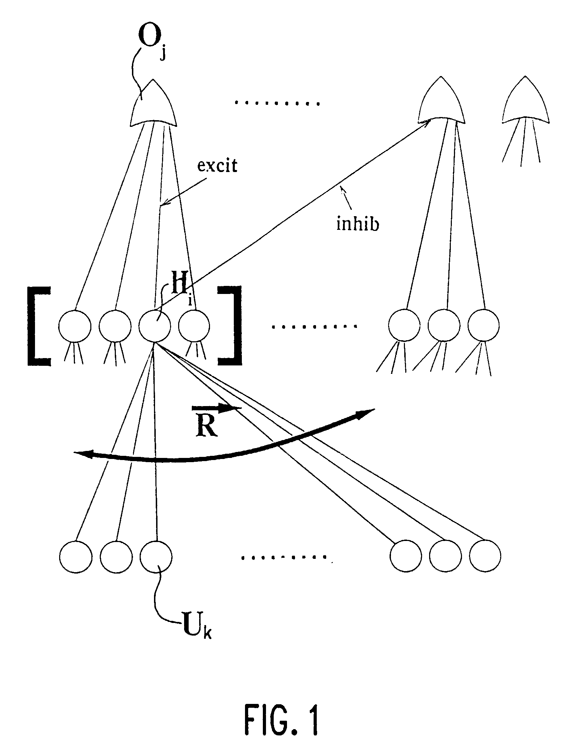

Le dispositif neuronal dont le schéma est représenté sur la figure 1 est destiné à réaliser des classements. On entend par là que, en présence d'une population d'objets qui peuvent être répartis en classes distinctes, lorsqu'on présente la description d'un échantillon de cette population au dispositif, ce dernier détermine à quelle classe appartient l'échantillon. Par exemple, les objets peuvent être des lettres de l'alphabet présentées sous différentes formes ou apparences, et les classes sont : "lettre a", "lettre b", etc.

Une donnée d'entrée, qu'il s'agisse d'un échantillon d'apprentissage dont la classe est connue, ou d'un échantillon dont la classe doit être déterminée par le dispositif, se présente sous la forme d'un vecteur à K coordonnées ou composantes, dans un hyper-espace à K dimensions. Dans le cas de lettres par exemple, on peut définir une zone dans laquelle la lettre est censée se trouver et analyser cette zone par points successifs, la luminance de chacun de ces points fournissant une des composantes du vecteur d'entrée.

Le dispositif comporte une couche de neurones d'entrée $U_k$, en nombre égal au nombre K des coordonnées d'un vecteur d'entrée, à chacun desquels est amenée une valeur d'entrée correspondant à l'une des composantes d'un vecteur d'entrée.

Chacun des neurones $H_i$ d'une couche de neurones cachés a une entrée reliée à la sortie d'un des neurones d'entrée $U_k$. Pour ne pas encombrer la figure, seules sont représentées les liaisons des neurones U vers un des neurones H, mais en réalité tous les neurones U sont reliés à tous les neurones H. Par contre aucune sortie d'un neurone caché n'est reliée à une entrée d'un autre neurone caché.

Le nombre $N_i$ des neurones cachés est fonction de la difficulté du problème de classement à résoudre, comme cela sera expliqué plus loin.

Le dispositif comporte enfin une couche de neurones de sortie $O_j$, en nombre J, égal au nombre des classes. Plus loin sera expliqué quels neurones cachés H sont reliés à quels neurones de sortie O.

L'activation d'un neurone caché $H_i$ est calculée sur la base de la distance, dans l'hyper-espace, entre le point représentant le vecteur d'entrée appliqué aux neurones $U_k$ et un point de référence qui est associé au neurone $H_i$.

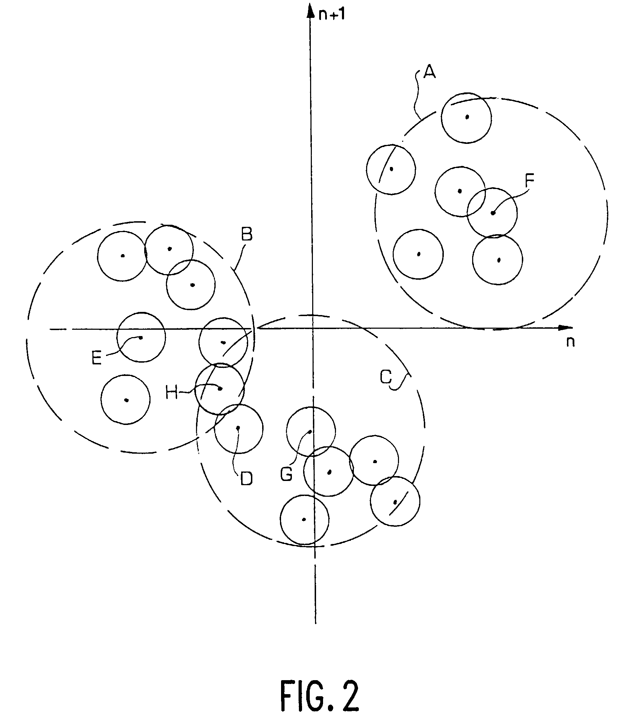

De tels points sont représentés sur la figure 2. Il s'agit d'une projection de l'espace sur le plan de la figure. Les points représentent chacun un échantillon d'apprentissage.

A chacun des points est associé un domaine représenté par un petit cercle en trait plein, entourant le point. Ce cercle est le lieu des points qui sont à une distance donnée de l'échantillon. Cette distance est représentée par la formule suivante :

$$\text{Distance }(X,W) = \text{racine } n^{\text{ième}} \left(\sum_{k=0}^{K-1} (|X_k - W_{ki}|)\right)^n$$

où les $X_k$ sont les coordonnées d'un point de l'espace dont on cherche la distance et les $W_{ki}$ sont les K coordonnées du point correspondant au neurone $H_i$, par rapport auquel on cherche la distance (X,W). Le nombre n, dans une métrique Euclidienne, est égal à 2 (dans ce cas il est inutile de prendre la valeur absolue de la différence $X_k - W_{ki}$). Toute métrique peut être employée, pourvu que dans cette métrique, on ait :

Distance (x,y) = distance (y,x)
Distance (x,z) <= distance (x,y) + distance (y,z)
La condition : distance (x,x) = 0 n'est pas nécessaire.

Pour construire un tel dispositif, il est connu de répartir les échantillons en amas ("clustering") et de mettre en place un seul neurone caché représentant chaque amas. Tout le problème consiste alors à déterminer comment grouper les échantillons en amas pour ne pas trop perdre d'information et avoir la plus grande fiabilité possible pour les résultats de classification. Avec le procédé de la présente invention, l'élimination de ceux des échantillons qui n'ont pas besoin d'être pris en compte se fait automatiquement et aucune information n'est perdue.

On part d'un réseau qui ne comporte aucun neurone caché. On prélève d'abord n'importe quel échantillon dans l'ensemble des échantillons d'apprentissage. Cet échantillon est donc retiré de l'ensemble : on ne le rencontrera plus à l'avenir. On place un premier neurone caché correspondant à cet échantillon et l'on définit l'activation de ce neurone en fonction de la position, dans l'hyperespace, du point représentant l'échantillon, d'après la formule :

$$\text{Activation} = f\left(\text{ racine } n^{\text{ième}} \left(\sum_{k=0}^{K-1} \left(\left(\left|X_k - W_{k1}\right|\right)^n\right)\right)/\sigma_1\right)$$

où les $X_k$ sont les coordonnées d'un vecteur d'entrée à classer, la fonction f est une fonction qui grandit lorsque son argument tend vers zéro, par exemple une fonction de type "exp(-x)" ou une fonction de type " $1/(|x|+a)$", les $W_{k1}$ sont les coordonnées du point 1 représentant le premier échantillon, et $\sigma_i$ est un coefficient ajustable propre au premier neurone.

On relie ce neurone caché $H_1$ au neurone de sortie $O_j$ correspondant à la classe de l'échantillon.

Ensuite on prend un second échantillon (par exemple au hasard) dans l'ensemble et on le retire de l'ensemble (pour ne plus le retrouver par le suite). On l'applique au dispositif en tant qu'objet à classer, et le dispositif indique donc une classe dans laquelle il range l'échantillon. Deux cas sont possibles : soit cette classe est effectivement celle de ce second échantillon, soit elle ne l'est pas. Si la classe est la bonne, on n'installe pas de neurone, et on poursuit le processus en prenant un troisième échantillon. Dans le cas où la classe indiquée n'est pas correcte, alors on place un second neurone caché dans le dispositif dont l'activation est définie par :

$$\text{Activation} = f\left(\text{ racine } n^{\text{ième}} \left(\sum_{k=0}^{K-1} \left(\left(\left|X_k - W_{k2}\right|\right)^n\right)\right)/\sigma_2\right)$$

les $W_{k2}$ étant les coordonnées du point représentant le second échantillon donnant lieu à la création d'un neurone, et $\sigma_2$ est un coefficient ajustable propre au second neurone, et on relie ce second neurone caché au neurone de sortie correspondant à la classe du second échantillon.

On continue ainsi en prenant tour à tour dans un ordre quelconque tous les échantillons restants, en les appliquant au dispositif en tant qu'objets à classer, avec à chaque fois création d'un nouveau neurone seulement si la classe indiquée n'est pas correcte, ce neurone ayant l'activation :

$$\text{Activation} = f\left(\text{ racine } n^{\text{ième}} \left(\sum_{k=0}^{K-1} \left(\left(\left|X_k - W_{ki}\right|\right)^n\right)\right)/\sigma_i\right)$$

où les $W_{ki}$ sont les coordonnées de l'échantillon qui a entraîné la création du neurone i, $\sigma_i$ étant un coefficient ajustable propre au neurone i.

On continue ainsi jusqu'à ce qu'il n'y ait plus d'échantillons dans l'ensemble. Le dispositif se construit donc de lui même en mettant en place les neurones cachés et leurs liaisons avec les neurones de sortie. Plus la classe des exemples est difficile à déterminer, c'est-à-dire plus le problème est difficile, plus il y a d'exemples pour lesquels une bonne réponse n'est pas trouvée d'emblée (lorsque les exemples sont appliqués au dispositif en tant qu'objets à classer), et plus le nombre de neurones cachés introduits est grand.

Dans le cas où le réseau de neurones n'est pas réel, mais est simulé sur un ordinateur conventionnel, les calculs déterminant la classe d'un échantillon présenté comme objet à classer sont particulièrement rapides au début du processus puisqu'il y a très peu de neurones. Le processus ralentit ensuite au fur et à mesure de l'introduction de nouveaux neurones, mais il reste néanmoins globalement très rapide.

Considérons les points D et H voisins de la figure 2, et supposons qu'ils font partie de classes différentes. Il est possible que, lors de leurs examens comme objets à classer, les résultats obtenus, du fait du voisinage, soient les mêmes pour ces deux points. Bien entendu, ce cas donne lieu à la création d'un neurone, au moins pour l'échantillon examiné en second, mais il est en outre avantageux de compléter le processus en ajoutant dans ce cas, en plus de la synapse normale établie entre le neurone caché ainsi créé et le neurone de sortie de la classe trouvée par erreur, une synapse de poids négatif. Avec cette façon de faire, le nombre total de synapses de sortie est alors au plus égal à deux fois le nombre de neurones cachés.

Avec le réseau tel que décrit jusqu'ici, lorsqu'un objet est présenté pour être classé, toutes les distances (dans l'hyper-espace) entre le point correspondant à l'objet présenté et les points correspondant à tous les neurones cachés doivent être déterminées. En simulation sur un ordinateur conventionnel, ces opérations sont coûteuses. Pour réduire le temps de calcul, il est proposé de répartir les échantillons en groupes et dans un premier temps d'utiliser seulement les neurones cachés représentatifs d'un groupe, puis dans un deuxième temps de rechercher une activation suffisante, ou bien la plus forte activation, parmi les neurones cachés du groupe dont le neurone représentatif a fourni la plus forte activation dans le premier temps. Ce processus en deux temps sera expliqué de façon plus détaillée plus loin.

Dans l'exemple de la figure 2, les groupes sont délimités par des hyper-sphères A, B, C, qui sont définies au fur et à mesure de l'introduction des neurones cachés. Pour cela, au cours du processus d'introduction des neurones cachés, on recherche pour chacun des neurones introduits s'il fait partie d'un groupe préalablement défini auquel cas il lui est incorporé, alors que s'il ne fait partie d'aucun groupe préalablement défini un nouveau groupe est formé dont il est le neurone représentatif. Le premier neurone introduit est par conséquent défini comme représentatif du premier groupe. Un neurone est considéré comme faisant partie d'un groupe donné si la distance entre le point de référence associé à ce neurone et le point de référence associé au neurone représentatif du groupe en question est inférieure au rayon d'une hyper-sphère de rayon déterminé centrée sur le point de référence correspondant au neurone représentatif du groupe, autrement dit s'il est dans cette hyper-sphère. Le rayon en question est une grandeur de même nature que le paramètre $\sigma_i$ défini plus haut. Ainsi par exemple on peut imaginer que, lors de la construction du réseau, le point F est rencontré le premier, aucun des autres points de l'hyper-sphère A n'ayant été trouvé jusque là. Une hyper-sphère A est alors définie, centrée sur le point F. Lorsque le point E est rencontré, il ne fait pas partie de l'hyper-sphère A (ni d'aucune autre), donc une hyper-sphère B est créée. Lorsqu'ensuite le point G est rencontré, comme il ne fait pas partie des hyper-sphères précédentes, l'hyper-sphère C est créée. Les autres points des hyper-sphères ont été rencontrés après le point F pour ce qui concerne les points de l'hyper-sphère A, après le point E pour ce qui concerne les points de l'hyper-sphère B, et après le point G pour ce qui concerne les points de l'hyper-sphère C. Il faut remarquer que si le point D par exemple avait été rencontré avant le point G, une hypersphère aurait été créée avec le point D comme centre. Le point G y serait contenu, et de ce fait l'hyper-sphère C n'aurait pas été créée.

Ainsi donc au cours du processus d'introduction des neurones cachés, on regarde pour chaque exemple non seulement quelle est la réponse (le classement) fournie par le dispositif, mais encore, au cas où cet exemple conduit à l'introduction d'un nouveau neurone, si le point correspondant est déjà dans une hyper-sphère existante. La répartition en groupes est ainsi déjà établie à l'issue du processus principal sans que l'on ait à procéder à une passe supplémentaire.

On constate que la façon dont sont définis les groupes dépend de l'ordre dans lequel sont rencontrés les échantillons d'apprentissage, le hasard intervenant donc dans le processus. Des hyper-sphères peuvent ainsi être amenées à se recouper. Par exemple, le point H est défini indifféremment comme faisant partie du groupe B ou du groupe C selon que, lors du calcul des distances du point H aux centres des hypersphères, le point E ou le point G a été rencontré le premier. On a constaté que ceci n'avait pas d'inconvénient et ne diminuait pas les performances du dispositif final, notamment grâce au mode d'utilisation de ce dernier.

On a décrit ci-dessus une manière de définir un certain niveau de groupement des neurones cachés. On entend par "niveau de groupement" le fait qu'un groupe comprenne un plus ou moins grand nombre de neurones, autrement dit que le rayon de l'hyper-sphère définissant le groupe est plus ou moins grand. Il est clair qu'un deuxième niveau ou plusieurs autres niveaux pourraient être déterminés de la même façon sans difficultés. Il suffirait à cet effet de définir un ou plusieurs autres rayons (de plus en plus grands) pour des hyper-sphères centrées sur le point de référence correspondant au neurone représentatif d'un groupe (le critère d'appartenance à un groupe étant le fait pour un point d'être dans cette hyper-sphère), et à partir desquels des groupes de plusieurs niveaux pourraient être définis au cours du même processus.

Lorsque l'on utilise le dispositif, la classe d'un échantillon est déterminée de la manière suivante:

- dans un premier temps on utilise seulement les neurones cachés représentatifs d'un groupe, par exemple tous les neurones correspondant aux points situés dans la même hyper-sphère A sont représentés par le neurone caché F, ceux situés dans la même hyper-sphère B sont représentés par le neurone caché E, et ceux situés dans la même hypersphère C sont représentés par le neurone caché G, et on détermine celui qui prend la plus forte activation,
- puis dans un deuxième temps on calcule l'activation des autres neurones du groupe dont le neurone représentatif a fourni la plus forte activation dans le premier temps, et dès que l'on trouve un neurone dont l'activation dépasse un seuil donné (autrement dit lorsque le point représentatif de l'échantillon est compris dans une hyper-sphère de rayon donné centrée sur le point représentatif du neurone) on considère ce neurone comme étant le gagnant. Au lieu de s'arrêter dès ce moment, on peut aussi étendre la recherche, en cherchant la plus forte activation parmi tous les neurones cachés du groupe dont le neurone représentatif a fourni la plus forte activation dans le premier temps. Si c'était par exemple le groupe C, il est possible que dans le deuxième temps ce soit le neurone correspondant au point D qui prenne la plus forte activation. Il faut bien voir qu'il est parfaitement possible que ce point D ne fasse pas partie de la même classe que le point G. L'échantillon d'entrée sera alors classé dans la classe du point D. C'est notamment pour cela que le coté aléatoire de la détermination des groupes n'a finalement pas d'inconvénient.

Il est clair que ce processus s'applique aisément au cas où il y a plus de deux niveaux de groupement des neurones cachés, en traitant les niveaux tour à tour dans l'ordre décroissant de la dimensions des groupes correspondants.

Quand on ajoute, en plus d'une synapse normale établie entre un neurone caché et un neurone de sortie, une synapse de poids négatif pour des échantillons d'apprentissage qui ont des points représentatifs voisins, mais qui ne font pas partie de la même classe, la règle pour déterminer si ces points sont voisins peut par exemple être que les deux exemples de classes différentes font partie du même groupe.

On comprend aisément que le temps de calcul est réduit, puisque si par exemple il y a 900 neurones cachés divisés en 30 groupes de 30 neurones, on aura à calculer 30+30 activations au lieu de 900.

On peut en outre étendre la recherche en recherchant la plus forte activation non pas parmi les neurones cachés d'un seul groupe, mais parmi ceux des quelques groupes dont les neurones représentatifs ont fourni les plus fortes activations dans le premier temps. Cela allonge un peu le calcul mais procure plus de sécurité. On peut par exemple choisir arbitrairement un nombre prédéterminé de groupes dont on considèrera tous les neurones au cours du deuxième temps, ou bien fixer un seuil d'activation minimal au cours du premier temps pour être "admis" lors du deuxième temps.

Un autre moyen d'étendre la recherche est de "forcer" un rayon plus grand que le rayon choisi au départ, pour l'hyper-sphère définissant un groupe d'un niveau déterminé.

Lorsque l'on relie un neurone caché au neurone de sortie adéquat, on installe arbitrairement un poids positif qui est donc le même pour toutes ces liaisons. Les poids en question, ainsi que les coefficients ajustables $\sigma_i$, peuvent être affinés ultérieurement, lorsque tous les neurones cachés sont installés, par exemple au moyen d'un processus connu de rétro-propagation de l'erreur, qui ne demande pas un temps d'exécution excessif, du fait que l'on dispose déjà d'une solution approchée. De plus on peut utiliser la répartition en groupes pour accélérer le processus de rétro-propagation de l'erreur. Dans un tel processus, on présente un échantillon à l'entrée, on évalue le réseau (propagation), on calcule l'erreur, puis on la "rétro-propage" en modifiant les poids au fur et à mesure. Avec la répartition en groupes, on gagne du temps à l'évaluation puisqu'on n'évalue qu'une partie du réseau, mais on en gagne aussi lors de la rétro-propagation puisqu'on ne modifie pas tous les poids et les $\sigma_i$ du réseau mais seulement ceux qui concernent les sorties reliant les neurones cachés du ou des groupe(s) utile(s), dont on avait mémorisé la liste au cours de la propagation.

Pour limiter les inconvénients éventuels dûs au fait que les neurones cachés ont été créés un peu au hasard il est en outre possible, une fois le dispositif terminé, de mettre en oeuvre un processus "d'élagage", aux fins d'enlever des neurones superflus. Ceci peut se faire par exemple en proposant à nouveau les exemples d'apprentissage comme échantillons à reconnaître, mais en désactivant à chaque fois le neurone caché qui avait été mis en place à propos de cet exemple. Si le résultat est néanmoins correct, on supprime alors ce neurone.

## Revendications

1. Procédé pour construire un dispositif neuronal destiné au classement d'objets, au moyen d'un ensemble d'échantillons d'apprentissage ou exemples qui sont des objets dont la classe est connue, chaque objet à classer étant défini par un vecteur d'entrée qui peut être représenté par un point dans un hyper-espace, le dispositif comportant :

   - une couche de neurones d'entrée correspondant chacun à une des dimensions de l'hyper-espace,
   - une couche de neurones cachés dont les entrées sont exclusivement connectées aux neurones d'entrée et dont l'activation est une fonction inverse de la distance, dans l'hyper-espace, entre le point qui représente le vecteur d'entrée et un point de référence qui est associé à ce neurone caché,
   - et une couche de neurones de sortie correspondant chacun à une des classes,

   procédé consistant à :

   - partir d'un dispositif sans neurone caché
   - prélever un échantillon quelconque dans le dit ensemble d'échantillons d'apprentissage,

- placer un premier neurone caché dans le dispositif en définissant le dit point de référence associé à ce neurone comme étant le point qui représente dans l'hyper-espace l'échantillon prélevé et en disposant une connexion de poids positif entre ce neurone caché et le neurone de sortie correspondant à la classe de l'échantillon,
- prélever un nouvel échantillon dans l'ensemble et l'appliquer au dispositif en tant qu'objet à classer et :

  - si le classement fourni en réponse n'est pas correct, introduire dans le dispositif un nouveau neurone caché correspondant au nouvel échantillon en définissant le point de référence associé à ce neurone comme étant le point qui représente dans l'hyper-espace le nouvel échantillon, et en disposant une connexion de poids positif entre le neurone caché et le neurone de sortie correspondant à la classe du nouvel échantillon,
  - alors que si le classement fourni en réponse est correct, aucun neurone caché supplémentaire correspondant au nouvel échantillon n'est ajouté,

- traiter tous les échantillons restants de la même manière jusqu'à ce qu'il n'y ait plus d'échantillons dans l'ensemble, caractérisé en ce que l'ensemble des neurones cachés est divisé en groupes avec un neurone représentatif pour chaque groupe, un groupe étant défini comme contenant les neurones pour lesquels les points qui les représentent dans l'hyper-espace sont contenus dans un volume donné autour du point qui représente dans l'hyper-espace le dit neurone représentatif, et la détermination des groupes est faite de la façon suivante :

  - le premier neurone introduit est défini comme représentatif d'un premier groupe,
  - au fur et à mesure de l'introduction des neurones cachés, on recherche, pour chacun des neurones introduits, s'il fait partie d'un groupe préalablement défini, et :

    - s'il fait partie d'un groupe préalablement défini, il lui est incorporé,
    - s'il ne fait pas partie d'un groupe préalablement défini, un nouveau groupe est formé dont il est le neurone représentatif.

2. Procédé selon la revendication 1, caractérisé en ce que, les groupes en question étant considérés comme d'un premier niveau, des groupes d'un ou de plusieurs niveaux plus élevés sont définis, pour lesquels le dit volume est plus grand que pour les groupes du premier niveau, et ces groupes de niveau plus élevé sont définis au cours du même processus et de la même façon que les groupes du premier niveau.

3. Procédé selon l'une des revendications 1 ou 2, caractérisé en ce qu'une connexion de poids négatif est installée entre un neurone caché correspondant à un échantillon et un neurone de sortie correspondant à la classe d'un autre échantillon, dans le cas où deux neurones cachés correspondant à deux échantillons d'apprentissage ont des points représentatifs dont les coordonnées sont voisines, mais que ces échantillons ne font pas partie de la même classe.

4. Procédé selon l'une quelconque des revendications 1 à 3, caractérisé en ce qu'un neurone caché supplémentaire, correspondant à un échantillon d'apprentissage, est ajouté avec une liaison vers le neurone de sortie correspondant, si pour cet échantillon présenté en tant qu'objet à classer un neurone de sortie est effectivement activé pour la classe voulue, mais que la différence entre l'activité du neurone de sortie le plus activé et celle du neurone de sortie dont l'activation est la plus forte après celle du plus activé est inférieure à un seuil prédéterminé.

5. Dispositif neuronal destiné à classer des objets en J classes distinctes, les objets à classer étant définis par des vecteurs d'entrée à K coordonnées qui peuvent être représentés par des points dans un hyper-espace à K dimensions, le dispositif comportant :

- une couche de neurones d'entrée, en nombre K, correspondant chacun à une des dites dimensions,
- une couche de neurones de sortie, en nombre J, correspondant chacun à une des dites classes,
- et une couche de neurones cachés, chacun d'eux étant associé à un point de référence dans l'hyper-espace, et dont l'activation, pour un neurone donné, est une fonction inverse de la distance, dans l'hyper-espace, entre le point de référence qui est associé à ce neurone caché et le point qui représente le vecteur d'entrée,

caractérisé en ce que, les neurones cachés et leurs points de référence associés ayant été déterminés et, caractérisé en ce que les neurones cachés ont été répartis en groupes, chaque groupe comprenant un neurone représentatif du groupe un groupe étant défini comme contenant les neurones pour lesquels les points qui les représentent dans l'hyper-espace sont contenus dans un volume donné autour du point qui représente dans l'hyper-espace le dit neurone représentatif, ledit dispositif neuronal étant muni de moyens pour déterminer des groupes de la façon suivante :

- le premier neurone introduit est défini comme représentatif d'un premier groupe,
- au fur et à mesure de l'introduction des neurones cachés, on recherche, pour chacun des neurones introduits, s'il fait partie d'un groupe préalablement défini, et :

  - s'il fait partie d'un groupe préalablement défini, il lui est incorporé,
  - s'il ne fait pas partie d'un groupe préalablement défini, un nouveau groupe est formé dont il est le neurone représentatif,

ledit dispositif neuronal étant aussi muni de moyens pour:

- dans un premier temps, lors de la présentation d'un échantillon à classer, faire fonctionner seulement les neurones cachés représentatifs des groupes, et déterminer lequel prend la plus forte activation,
- dans un deuxième temps, faire fonctionner tous les neurones cachés du groupe ou des quelques groupes dont le(s) neurone(s) représentatif(s) a (ont) fourni la plus forte activation dans le premier temps.

6. Dispositif neuronal selon la revendication 5, caractérisé en ce qu'il est muni de moyens pour indiquer comme résultat la classe qui correspond au neurone de sortie le plus activé à condition que la différence entre l'activité de ce dernier et celle du neurone de sortie dont l'activation est la plus forte après celle du plus activé soit supérieure à une certaine valeur.

7. Dispositif selon l'une des revendication 5 ou 6, caractérisé en ce qu'un neurone de sortie est activé seulement au delà d'un certain seuil d'activation d'un neurone caché.

8. Dispositif selon l'une quelconque des revendications 5 à 7, caractérisé en ce que, les neurones cachés ayant été en outre répartis en groupes selon différents niveaux par le procédé de la revendication 2, il est muni de moyens pour, lors de la présentation d'un échantillon à classer, faire fonctionner, dans un premier temps, seulement les neurones cachés représentatifs des groupes du niveau le plus élevé, et déterminer lequel prend la plus forte activation, de moyens pour faire fonctionner, dans un temps suivant, seulement les neurones cachés représentatifs des groupes du niveau immédiatement inférieur, contenus dans le groupe du niveau le plus élevé, dont le neurone représentatif a fourni la plus forte activation dans le premier temps, et déterminer lequel prend la plus forte activation, et ainsi de suite jusqu'au plus bas niveau.

9. Dispositif neuronal selon l'une quelconque des revendications 5 à 8, caractérisé en ce que, pour calculer l'activation de chacun des neurones cachés en fonction inverse de la distance dans l'hyper-espace entre le point de référence associé à ce neurone caché et le point représentant le vecteur d'entrée, il est muni de moyens pour déterminer l'activation d'un neurone caché d'indice "i" par la formule :

$$\text{Activation} = f\left(\sqrt[n]{\left(\sum_{k=0}^{K-1}\left(\left(\left|X_k - W_{ki}\right|\right)^n\right)\right)/\sigma_i}\right)$$

dans laquelle les $W_{ki}$ sont les K coordonnées de l'échantillon qui a entraîné la création du neurone "i", $\sigma_i$ est un coefficient ajustable propre au neurone "i", les $X_k$ sont les K coordonnées d'un vecteur d'entrée à classer, n est un nombre entier, et la fonction "f" est une fonction qui grandit lorsque son argument tend vers zéro.

10. Dispositif selon la revendication 9, caractérisé en ce que le nombre n est égal à deux.

**Patentansprüche**

1. Verfahren zum Herstellen einer Neuronalanlage für die Klassifizierung von Objekten mit Hilfe einer Gesamtheit von Lehrproben oder Musterproben, die Objekte der bekannten Klasse sind, wobei jedes zu klassifizierende Objekt von einem Eingangsvektor definiert wird, der mit einem Punkt in einem höherdimensionalen Raum darstellbar ist, und die Anlage enthält:

- eine Eingangsneuronenschicht entsprechend je einer der Abmessungen des höherdimensionalen Raums,
- eine Schicht versteckter Neuronen, deren Eingänge ausschließlich mit Eingangsneuronen verbunden sind und deren Aktivierung eine Umkehrfunktion zum Abstand im höherdimesionierten Raum zwischen dem den Eingangsvektor darstellenden Punkt und einem mit diesem versteckten Neuron verknüpften Bezugspunkt ist, und
- eine Ausgangsneuronenschicht entsprechend je einer der Klassen,

das Verfahren folgende Schritte umfaßt:

- von einer Anlage ohne jedes versteckte Neuron ausgehen,
- dieser Gesamtheit von Lehrproben eine Probe entnehmen,
- ein erstes verstecktes Neuron bei Definierung des mit diesem Neuron verknüpften Bezugspunktes in die Anlage bringen, wobei der Bezugspunkt die entnommene Probe im höherdimensionalen Raum darstellt und eine Positivgewichtsverbindung zwischen diesem versteckten Neuron und dem Ausgangsneuron entsprechend der Probenklasse herstellt,
- eine neue Probe der Gesamtheit entnehmen und in die Anlage als zu klassifizierendes Objekt einbringen, und:

  - falls die durchgeführte Klassifizierung nicht einwandfrei ist, in die Anlage ein neues verstecktes Neuron entsprechend einer neuen Probe unter Definierung des mit diesem Bezugspunkt verknüpften Bezugspunktes als des Punktes eingeben, der im höherdimensionalen Raum die neue Probe darstellt und eine Positivgewichtsverbindung zwischen dem versteckten Neuron und dem Ausgangsneuron entsprechend der Klasse der neuen Probe herstellen,
  - während bei Einwandfreibefinden der vorgesehenen Klasse kein zusätzliches verstecktes Neuron entsprechend der neuen Probe hinzugefügt wird,

- alle restlichen Proben derart behandeln, als gäbe es keine weiteren Proben in der Ganzheit mehr,

dadurch gekennzeichnet, daß die Gesamtheit der Neuronen in Gruppen mit einem representativen Neuron für jede Gruppe eingeteilt und eine Gruppe derart definiert wird, daß sie die Neuronen umfaßt, für die die Punkte, die die Neuronen im höherdimensionalen Raum darstellen, in einem vorgegeben Volumen um den Punkt enthalten sind, der im höherdimensionalen Raum das representative Neuron darstellt, und die Bestimmung der Gruppen wie nachstehend angegeben erfolgt:

- das erste eingebrachte Neuron wird als typisch für eine erste Gruppe definiert,
- je nach der Eingabe der versteckten Neuronen wird für jedes der eingegebenen Neuronen festgestellt, ob es zu einer bereits definierten Gruppe gehört, und daß,

  - wenn es zu einer bereits definierten Gruppe gehört, in die Gruppe aufgenommen wird,
  - wenn es nicht zu einer bereits definierten Gruppe gehört, eine neue Gruppe gebildet wird, von der es das representative Neuron ist.

2. Verfahren nach Anspruch 1, dadurch gekennzeichnet, daß die betreffenden Gruppen als einen ersten Pegel betrachtet werden, Gruppen eines oder mehrerer höherer Pegel definiert werden, für die dieses Volumen größer ist als für die Gruppen des ersten Pegels, und diese Gruppen vom höheren Pegel im Laufe desselben Prozesses und auf dieselbe Weise wie die Gruppen vom ersten Pegel definiert werden.

3. Verfahren nach Anspruch 1 oder 2, dadurch gekennzeichnet, daß eine Negativgewichtsverbindung zwischen einem versteckten Neuron entsprechend einer Probe und einem Ausgangsneuron entsprechend der Klasse einer anderen Probe hergestellt wird, wenn zwei versteckte Neuronen entsprechend zwei Lehrproben representative Punkte haben, deren Koordinaten benachbart sind, aber daß diese Proben nicht zur selben Klasse gehören.

4. Verfahren nach einem der Ansprüche 1 bis 3, dadurch gekennzeichnet, daß ein zusätzliches verstecktes Neuron entsprechend einer Lehrprobe mit einer Verbindung nach dem entsprechenden Ausgangsneuron hinzugefügt wird, wenn für diese Probe als zu klassifizierendes Objekt wirksam ein Ausgangsneuron für die gewünschte Klasse erregt wird, aber daß der Unterschied zwischen der Erregung des kräftigst erregten Ausgangsneurons und der Erregung des Ausgangsneurons, dessen Erregung die zweitkräftigste nach der kräftigsten Erregung geringer ist als die Höhe einer vorgegebenen Schwelle.

5. Neuronalanlage zum Klassifizieren der Objekte in J unterschiedenen Klassen, wobei die zu klassifizierenden Objekte von Eingangsvektoren mit K Koordinaten definiert werden, die mittels Punkten in einem höherdimensionalen Raum mit K Abmessungen darstellbar sind, und die Anlage enthält:

- eine Eingangsneuronenschicht in einer K-Anzahl entsprechend je einer der Abmessungen,
- eine Ausgangsneuronenschicht in einer J-Anzahl entsprechend je einer der Klassen, und
- eine Schicht versteckter Neuronen, die mit je einem Bezugspunkt im höherdimensionalen Raum verknüpft, und deren Erregung für ein bestimmtes Neuron eine Umkehrfunktion zum Abstand im höherdimensionalen Raum zwischen dem mit diesem versteckten Neuron verknüpften Bezugspunkt und dem den Eingangsvektor darstellenden Punkt ist, dadurch gekennzeichnet,

daß die versteckten Neuronen und ihre zugeordneten Bezugspunkte bestimmt und die versteckten Neuronen in Gruppen mit dem erfindungsgemäßen Verfahren eingeteilt werden, wobei jede Gruppe ein für die Gruppe representatives Neuron enthält, eine Gruppe derart definiert wird, daß sie die Neuronen umfaßt, für die die Punkte, die die Neuronen im höherdimensionalen Raum darstellen, in einem vorgegeben Volumen um den Punkt enthalten sind, der im höherdimensionalen Raum das representative Neuron darstellt, und daß die Neuronalanlage mit Mitteln zum Bestimmen der Gruppen wie nachstehend angegeben versehen ist:

- das erste eingebrachte Neuron wird als typisch für eine erste Gruppe definiert, - je nach der Eingabe der versteckten Neuronen wird für jedes der eingegebenen Neuronen festgestellt, ob es zu einer bereits definierten Gruppe gehört, und daß,

  - wenn es zu einer bereits definierten Gruppe gehört, es in die Gruppe aufgenommen wird,
  - wenn es nicht zu einer bereits definierten Gruppe gehört, eine neue Gruppe gebildet wird, von der es das representative Neuron ist, und

die Anlage mit Mitteln zum Durchführen folgender Vorgänge versehen ist:

- in einer ersten Zeit bei der Vorführung einer zu klassifizierender Probe den Einsatz lediglich der für die Gruppen representativen versteckten Neuronen und die Bestimmung des Neurons mit der kräftigsten Erregung,
- in einer zweiten Zeit den Einsatz aller versteckter Neuronen der Gruppe oder einiger Gruppen, deren representative(s) Neuron(en) die kräftigste Erregung in der ersten Zeit ausgelöst hat bzw. haben.

6. Neuronalanlage nach Anspruch 5, dadurch gekennzeichnet, daß die Anlage mit Anzeigemitteln zum Anzeigen der Klasse versehen ist, die dem Ausgangsneuron mit der größten Erregung unter der Bedingung entspricht, daß der Unterschied zwischen der Erregung des letztgenannten Neurons und der des Ausgangsneurons, dessen Erregung die zweitkräftigste nach der kräftigsten Erregung ist, einen bestimmten Wert überschreitet.

7. Anlage nach einem der Ansprüche 5 oder 6, dadurch gekennzeichnet, daß ein Ausgangsneuron nur über eine bestimmte Erregungsschwelle eines versteckten Neurons hinaus erregt wird.

8. Anlage nach einem der Ansprüche 5 bis 7, dadurch gekennzeichnet, daß die versteckten Neuronen außerdem in Gruppen nach verschiedenen Pegeln mit dem Verfahren nach Anspruch 2 verteilt werden, und die Anlage bei der Einführung einer zu klassifizierenden Probe mit Mitteln zum Aktivieren nur der für die Gruppen mit höchstem Pegel representativen versteckten Neuronen in einer ersten Periode, zum Bestimmen jenes Neurons mit der kräftigsten Erregung, und mit Mitteln zum Aktivieren nur der für die Gruppen mit direkt folgendem niedrigerem Pegel in der Gruppe mit dem höchsten Pegel representativen versteckten Neuronen in einer folgenden Periode, von denen das representative Neuron die kräftigste Erregung in der ersten Periode zeigt, und zum Bestimmen des Neurons mit der kräftigsten Erregung und so weiter bis zum niedrigsten Pegel versehen ist.

9. Neuronalanlage nach einem oder mehreren der Ansprüche 5 bis 8, dadurch gekennzeichnet, daß die Ablage zum Berechnen der Erregung jedes der versteckten Neuronen mit Umkehrfunktion zum Abstand im höherdimensionalen Raum zwischen dem mit diesem versteckten Neuron verknüpften Bezugspunkt und dem den Eingangsvektor darstellenden Punkt mit Mitteln zum Bestimmen der Erregung eines mit "i" bezeichneten versteckten Neurons mit Hilfe der folgenden Gleichung versehen ist,

$$K\text{-}1$$

$$\text{Erregung} = f(\text{ Wurzel } n. \ ( \ \Sigma \ ((|X_k - W_{ki}|)^n))/\sigma_i)$$
$$k=0$$

worin $W_{ki}$ die K Koordinaten der Probe sind, die die Erzeugung des Neurons "i" bewirkt hat, $\sigma_i$ ein dem Neuron "i" eigener Koeffizient ist, die $X_k$ die K Koordinaten eines zu klassifizierenden Eingangsvektors sind, n eine Ganzzahl beispielsweise gleich zwei ist, und die Funktion "f" eine Funktion ist, die mit dem Abfall ihres Arguments nach Null größer wird.

10. Anlage nach Anspruch 9, dadurch gekennzeichnet, daß die Anzahl n gleich zwei ist.

**Claims**

1. A method of constructing a neural device for the classification of objects by means of a set of learning samples or examples which are objects whose class is known, each object to be classified being defined by an input vector which can be represented by a point in a hyperspace, the device comprising:

   - a layer of input neurons, each of which corresponds to one of the dimensions of the hyperspace,
   - a layer of hidden neurons whose inputs are connected exclusively to the input neurons and whose activation is an inverse function of the distance in the hyperspace between the point representing the input vector and a reference point associated with he relevant hidden neuron,
   - and a layer of output neurons, each of which corresponds to one of the classes, which method consists of:
   - commencing with a device without hidden neuron,
   - taking an arbitrary sample from said set of learning samples,
   - placing a first hidden neuron in the device while defining said reference point associated with the relevant neuron as being the point representing the sample taken in the hyperspace, and establishing a connection of positive weight between the relevant hidden neuron and the output neuron corresponding to the class of the sample,
   - taking a new sample from the set and applying it to the device as the object to be classified and:

      - if the classification provided in response is not correct, introducing into the device a new hidden neuron, corresponding to the new sample, while defining the reference point associated with this neuron as being the point representing the new sample in the hyperspace, and establishing a connection of positive weight between the hidden neuron and the output neuron corresponding to the class of the new sample,
      - whereas if the classification provided in response is correct, no supplementary hidden neuron corresponding to the new sample is added,

   - treating all remaining samples in the same way until no samples are left in the set, characterized in that the set of hidden neurons is subdivided into groups with one neuron representative for each group, a group being defined as a group containing the neurons for which the points represented in the hyperspace are contained in a given volume around the point which represents said representative neuron in the hyperspace, the groups being determined as follows:
   - the first neuron introduced is defined as being representative of a first group,
   - in the course of the introduction of hidden neurons it is checked, for each neuron introduced, whether it forms parts of a previously defined group, and:

      - if it forms part of a previously defined group, it is incorporated therein,
      - if it does not form part of a previously defined group, a new group is formed for which it is the representative neuron.

2. A method as claimed in Claim 1, characterized in that, the groups in question being considered to be of a first level, groups of one or several higher levels are defined for which said volume is greater than for the groups of the first level, said groups of higher level being defined in the course of the same process and in the same way as the groups of the first level.

3. A method as claimed in one of the Claims 1 or 2, characterized in that a connection of negative weight is established between a hidden neuron corresponding to a sample and an output neuron corresponding to the class of another sample in the case where two hidden neurons corresponding to two learning samples have representative points whose coordinates are neighbours, however, without these samples belonging to the same class.

4. A method as claimed in any one of the Claims 1 to 3, characterized in that a supplementary hidden neuron, corresponding to a learning sample, is added with a connection to the corresponding output neuron if for this sample, presented as an object to be classified, an output neuron is effectively activated for the desired class, but the difference between the activity of the output neuron most activated and that of the output neuron most activated but one is below a given threshold.

5. A neural device for the classification of objects in J distinct classes, the objects to be classified being defined by input vectors with K coordinates which can be represented by points in a hyperspace of K dimensions, which device comprises:

- a layer of input neurons, comprising K neurons, each of which corresponds to one of said dimensions,
- a layer of output neurons, comprising J neurons, each of which corresponds to one of said classes,
- and a layer of hidden neurons, each of which is associated with a reference point in the hyperspace and whose activation, for a given neuron, is an inverse function of the distance in the hyperspace between the reference point associated with the relevant hidden neuron and the point representing the input vector,

characterized in that, the hidden neurons and their associated reference points having been determined and the hidden neurons subdivided into groups, each groups comprising a neuron representative of the group, a group being defined as a group containing the neurons for which the points represented in the hyperspace are contained in a given volume around the point which represents said representative neuron in the hyperspace, said neural device being provided with means for determining groups as follows:

- the first neutron introduced is defined as being representative of a first group,
- in the course of the introduction of hidden neurons it is checked, for each neuron introduced, whether it forms part of a previously defined group, and:

  - if it forms part of a previously defined group, it is incorporated therein,
  - if it does not form part of a previously defined group, a new group is formed for which it is the representative neuron,

said neural device also being provided with means for:

- operating, upon presentation of a sample to be classified, only the hidden neurons representative of the groups during a first period, and determining which takes the strongest activation,
- operating, during a second period, all hidden neurons of the group or a few groups whose representative neuron(s) has (have) provided the strongest activation in the first period.

6. A neural device as claimed in Claim 5, characterized in that it is provided with means for indicating their result as the class corresponding to the most activated output neuron, subject to the condition that the difference between the activity of the latter and that of the output neuron whose activation is strongest but one must exceed a given value.

7. A device as claimed in Claim 5 or 6, characterized in that an output neuron is activated only beyond a given activation threshold of a hidden neuron.

8. A device as claimed in any one of the Claims 5 to 7, characterized in that, the hidden neurons also having been subdivided into groups of different levels by means of the method claimed in Claim 2, it is provided with means for operating, upon presentation of a sample to be classified, only the hidden neurons representative of the groups of the highest level during a first period, and for determining which neuron takes the strongest activation, means for operating, during a subsequent period, only the hidden neurons representative of groups of the directly lower level, contained in the group of the highest level, whose representative neuron has provided the strongest activation during the first period, and for determining which neuron takes the strongest activation, and so on until the lowest level is reached.

9. A neural device as claimed in any one of the Claims 5 to 8, characterized in that for calculating the activation of each of the hidden neurons as an inverse function of the distance in the hyperspace between the reference point associated with this hidden neuron and the point representing the input vector it is provided with means for determining the activation of a hidden neuron having the index "i" by way of the formule:

$$\text{Activation} = f(n^{th} \text{ root of } \sum_{k=0}^{K-1} ((|X_k - W_{ki}|)^n ((/\delta_i))$$

in which $W_{ki}$ represents the K coordinates of the sample having triggered the formation of the neuron "i", $\delta_i$ is an adjustable coefficient associated with the neuron "i", $X_k$ represents the K coordinates of an input vector to be classified, n is an integer, and the function "f" is a function which increases as its argument tends towards zero.

10. A device as claimed in Claim 9, characterized in that the number n equals two.

FIG. 1

FIG. 2